# EUROPÄISCHE PATENTANMELDUNG

(11) **EP 1 717 754 A2**
(43) Veröffentlichungstag der Anmeldung: **02.11.2006**
(21) Anmeldenummer: 06008959.6
(22) Anmeldetag: 28.04.2006
(51) Int. Cl.: G06T 7/00

(54) **Verfahren zur Klassifikation von Giessfehlern im Rahmen einer Röntgenanalyse**

(30) Priorität: 28.04.2005 DE 102005019800
(71) Anmelder: YXLON International X-Ray GmbH, 22419 Hamburg (DE)
(72) Erfinder: Herold, Frank, 22926 Ahrensburg (DE)
(74) Vertreter: DTS München

(57) **Zusammenfassung**

Die Erfindung befasst sich mit einem Verfahren zur Klassifikation von Gießfehlern in einem Gussteil im Rahmen einer Röntgenanalyse, wobei die Gießfehler jeweils automatisch einem bekanntem Gießfehlertyp zugeordnet werden, indem das Röntgenbild des Gussteils mit Hilfe von Merkmalen aus Trainingsbildern bekannter Gießfehlertypen verglichen wird und somit die vorhandenen Gießfehler im untersuchten Gussteil festgestellt werden.

## Beschreibung

Die Erfindung befasst sich mit einem Verfahren zur Klassifikation von Gießfehlern in einem Gussteil im Rahmen einer Röntgenanalyse.

Es sind Verfahren bekannt, bei denen sich die Klassifikation eines Gießfehlers auf einen Soll-Ist-Vergleich mit einer Spezifikation beschränkt. Die verwendeten Spezifikationen basieren im Allgemeinen auf flächenbasierten Merkmalen. Das Ergebnis bei diesen bekannten Klassifikationsverfahren ist eine einfache Gut/Schlecht-Entscheidung. Dies bedeutet, dass in dem automatisierten Verfahren mittels eines automatischen Fehlererkennungssystems (ADR-System) lediglich entschieden wird, ob das gerade mittels der Röntgenanalyse geprüfte Gussteil einen Gießfehler aufweist oder nicht. Dies hat den Nachteil, dass lediglich unter Zuhilfenahme der manuellen bzw. visuellen Begutachtung durch den Gießer im Nachhinein festgestellt werden kann, welcher konkrete Gießfehler vorliegt.

Darüber hinaus ist es bekannt, dass der Gießer die Klassifikation eines Gießfehlers durch Betrachten des Röntgenbildes des Gussteils vornimmt. Hierfür ist eine große Erfahrung nötig und der Gießfehler ist regelmäßig auch erst im Nachhinein zu detektieren, d.h. wenn das untersuchte Gussteil oberhalb der Spezifikationsgrenze einen nicht tolerierbaren Gießfehler aufweist. Für den Gießer, der bei diesem Verfahren ständig das Livebild an der Gießanlage überwachen muss, ist dies äußerst ermüdend, so dass es unter Umständen zu Fehleinschätzungen hinsichtlich des vorliegenden Gießfehlers kommen kann. Dies führt dazu, dass die Parameter des Gießprozesses zwar geändert werden, jedoch ein irrtümlich angenommener Gießfehler nicht behoben werden kann. Die Folge ist ein vermeidbarer zusätzlicher Ausschuss an Gussteilen mit Gießfehlern gegenüber der Situation, wenn der tatsächlich vorliegende Gießfehler korrekt erfasst worden wäre.

Aufgabe der Erfindung ist es deshalb, ein Verfahren zur Verfügung zu stellen, mit dem automatisch - d.h. ohne den für den Gießer ermüdenden Überwachungsvorgang - ein konkret vorliegender Gießfehler im Gussteil festgestellt werden kann.

Erfindungsgemäß wird dies mittels eines Verfahrens gemäß den Merkmalen des Patentanspruchs 1 gelöst. Dadurch, dass das während der Röntgenanalyse aufgenommene Röntgenbild des Gussteils anhand von Merkmalen, die aus Trainingsbildern der bekannten Gießfehlertypen berechnet wurden, verglichen wird, kann der konkret vorhandene Gießfehler im untersuchten Gussteil festgestellt werden. Dadurch ergibt sich die erfindungsgemäße automatische Zuordnung des detektierten Gießfehlers zu einem bekannten Gießfehlertyp. Dies bedeutet, dass im Anschluss daran ein schnelles Reagieren durch die Änderung der Parameter des Gießprozesses eingeleitet werden kann. Dadurch wird zusätzlicher Ausschuss vermieden. Im Unterschied zu dem bekannten Verfahren, bei dem der Gießer ständig das Livebild einer Gießanlage in ermüdender Art und Weise beobachten muss, erfolgt durch das erfindungsgemäße Verfahren die Erkennung des konkreten Gießfehlers automatisch. Darüber hinaus kann der Gießfehler auch noch unterhalb der Spezifikationsgrenze detektiert werden, so dass es gar nicht erst zu Ausschussteilen kommt, wenn dem Trend zum Gießfehler frühzeitig durch geeignete Anpassung der Parameter des Gießprozesses entgegengesteuert wird.

Eine vorteilhafte Weiterbildung der Erfindung sieht vor, dass die bekannten Gießfehlertypen in Klassen zusammengefasst werden, die vergleichbare Merkmale im Röntgenbild aufweisen. Insbesondere ist es dabei vorteilhaft, wenn die Klassen mit vergleichbaren Merkmalen im Röntgenbild zu Oberklassen zusammengefasst werden. Es ist dabei genauso gut möglich, anstatt der beiden angegebenen Ebenen noch weitere Zusammenfassungen auf darüber liegenden Ebenen vorzunehmen. Dadurch ist eine strukturierte Vorgehensweise des Verfahrens möglich, bei dem nicht ständig die gesamte Datenbank an Trainingsbildern durchlaufen werden muss, um einen Vergleich mit allen bekannten Gießfehlertypen zu erreichen. Durch die grobe Typisierung ist eine Zeitersparnis und somit eine echtzeitfähige Klassifikation des Gießfehlers möglich. Durch die Einsparung von zusätzlicher Zeit ist ein noch früheres Reagieren hinsichtlich der Änderung der Parameter des Gießprozesses möglich, so dass die Qualität der Gussteile noch verbessert werden kann.

Insbesondere ist das erfindungsgemäße Verfahren dann besonders effizient, wenn der Klassifikation ein Entscheidungsbaum zugrunde liegt, der von den abstrakten Oberklassen bzw. Klassen mit einfachen Merkmalen zu dem konkreten Gießfehler mit komplexen Merkmalen durchlaufen wird. Dadurch ist eine sehr zuverlässige und dennoch sehr schnelle Klassifikation des konkreten Gießfehlers möglich, da die wenigen Oberklassen in der ersten Stufe sehr schnell überprüft werden können und dann nur noch der Zweig des Entscheidungsbaumes weiterverfolgt werden muss, unter dessen einfache Merkmale der detektierte Gießfehler fällt. Dies gilt dann für jede weitere Ebene des Entscheidungsbaums analog, bis der konkrete Gießfehler mit den komplexen Merkmalen detektiert wurde.

Eine weitere vorteilhafte Weiterbildung der Erfindung sieht vor, dass, nachdem der konkrete Gießfehler automatisch erkannt wurde, eine automatische Steuerung des Gießprozesses erfolgt und die Parameter des Gießprozesses in Abhängigkeit des erkannten Gießfehlers automatisch verändert werden. Damit wird der Gießer noch weiter entlastet und er muss lediglich noch bei einer groben Fehlklassifikation durch das System eine Korrektur vornehmen. Ansonsten wird schon zum frühest möglichen Zeitpunkt der fortschreitenden Entwicklung eines Gießfehlers entgegengewirkt, so dass der Trend zu diesem Gießfehler automatisch durch die Anpassung der Parameter des Gießprozesses umgekehrt wird. Dadurch kommt es zu einer starken Reduzierung von Ausschussteilen, da die Spezifikationsgrenze des Gießfehlers nicht überschritten wird. Es werden demnach größtenteils fehlerfreie Gussteile produziert, so dass die benötigte Anzahl in geringerer Zeit hergestellt werden kann.

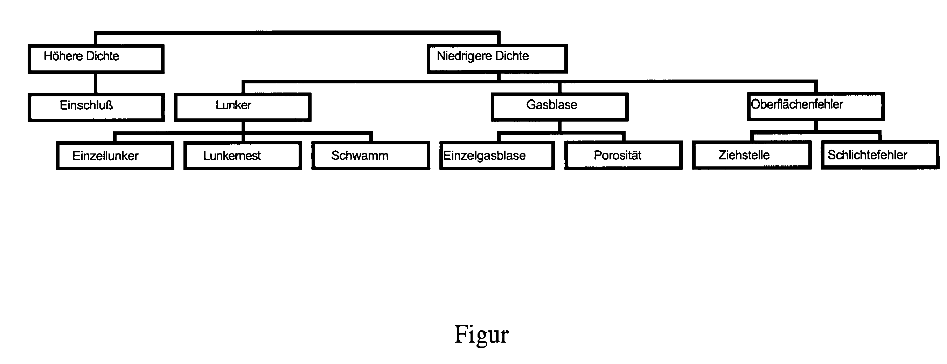

Weitere Vorteile und Einzelheiten der Erfindung werden anhand des Ausführungsbeispiels eines Entscheidungsbaumes dargestellt. Die einzige Figur zeigt ein Ausführungsbeispiel eines erfindungsgemäßen Entscheidungsbaumes, mit dem ein erfindungsgemäßes Verfahren durchgeführt werden kann.

ADR-Systeme können in der Regel auch Fehler unterhalb der Spezifikationsgrenzen detektieren. Werden diese Fehler dem Gießer rechtzeitig gemeldet, kann dieser je nach Gießfehlertyp geeignete Gegenmaßnahmen einleiten, bevor die kritische Grenze dieses Gießfehlertyps - die diesem zugeordnete Spezifikationsgrenze - überschritten wird. Auch zur nachträglichen Verbesserung des Gießprozesses ist es erforderlich, eine detaillierte Statistik bezüglich der aufgetretenen Gießfehler zu führen. Hierbei ist insbesondere auch interessant, wie viele Teile welchen Gießfehlertyp bei Vorliegen welcher Parameter des Gießprozesses aufweisen. Daher wird eine umgehende detaillierte Klassifikation der auftretenden Gießfehler benötigt, um eine Trendvorhersage bzw. eine Statistik über die Fehlertypen aufzubauen.

Im dargestellten Ausführungsbeispiel ist ein adaptiver Entscheidungsbaum dargestellt, der eine detaillierte Klassifikation nach den Anforderungen des jeweiligen Nutzers ermöglicht. Damit kann jeder Nutzer selbst entscheiden, welche konkreten Gießfehler er auf der untersten Ebene detektieren möchte und wie er diese Gießfehlertypen auf einer darüber liegenden Ebene zusammenfassen möchte bzw. auf weiteren darüber liegenden Ebenen jeweils weiter zusammenfassen möchte, damit auf der obersten Ebene nur einfache Merkmale, über die sehr einfach zu entscheiden ist, gegeben sind.

Anhand einer großen Zahl von Beispielbildern, den Trainingsbildern, von gefundenen Gießfehlertypen oder auch theoretisch vorgegebenen Gießfehlertypen, werden die einzelnen Ebenen von der Wurzel bis hin zu den Blättern trainiert. Hierzu müssen in jeder Ebene bestimmte Merkmale zugewiesen werden, mit deren Hilfe die Entscheidung für einen bestimmten Typ - auf der untersten Ebene der konkrete Gießfehlertyp - getroffen wird. Es bietet sich dabei an, die Merkmale von der obersten Ebene, in der lediglich einfache Merkmale zu entscheiden sind, bis hin zu den komplexeren Merkmalen für die konkreten Gießfehlertypen aufzuteilen.

Im konkret angegebenen Ausführungsbeispiel findet auf der ersten Ebene, den Oberklassen, nur ein einfacher Schwellwertvergleich bezüglich hell und dunkel statt. Dadurch wird festgestellt, ob in dem gerade geprüften Gussteil eine höhere Dichte oder eine niedrigere Dichte als vorgegeben vorliegt.

Beim Vorliegen einer höheren Dichte geht man im vorliegenden Ausführungsbeispiel davon aus, dass es sich um einen Einschluss - auf der zweiten Ebene, d.h. der Ebene der Klassen von Gussfehlertypen - handelt. Im vorliegenden Fall ist die Oberklasse der "Höheren Dichte" nicht weiter aufgespaltet, was jedoch keineswegs zwingend ist. Darüber hinaus ist auch die Klasse "Einschluss" nicht weiter unterteilt, was ebenfalls keineswegs zwingend ist.

Unter die Oberklasse "Niedrigere Dichte" fallen in der zweiten Ebene im Ausführungsbeispiel insgesamt drei Klassen: "Lunker", "Gasblase" und "Oberflächenfehler". Auch hier können durchaus - je nach Anwender - andere, weniger oder auch mehr Klassen definiert werden.

Die Klasse "Lunker" ist im Ausführungsbeispiel unterteilt in die konkreten Gießfehlertypen "Einzellunker", "Lunkernest" und "Schwamm". Auf dieser untersten Ebene wird die Zuordnung auf dem höchsten Detaillierungsgrad durchgeführt.

Die Klasse "Gasblase" ist im dargestellten Ausführungsbeispiel unterteilt in die konkreten Gießfehlertypen "Einzelgasblase" und "Porosität".

Die Unterteilung der Klasse "Oberflächenfehler" ist im dargestellten Ausführungsbeispiel auf die konkreten Gießfehler "Ziehstelle" und "Schlichtefehler" unterteilt.

Wie oben schon ausgeführt, lässt sich der gesamte Entscheidungsbaum je nach Anwendung und Intention des Anwenders mit Hilfe geeigneter Trainingsbilder nach dem jeweiligen Bedarf umgestalten. Dadurch wird eine individuell angepasste, detaillierte Klassifikation bezüglich unterschiedlicher Gießfehlertypen ermöglicht. Anstatt der dargestellten Unterteilung des Entscheidungsbaums ist - wie oben schon angedeutet - auch auf der untersten Ebene der konkreten Gießfehlertypen eine andere Aufteilung möglich. Wichtig ist nur, dass die jeweils geeigneten Trainingsbilder dem System zur Verfügung gestellt werden, so dass alle für den jeweiligen Gießprozess relevanten Gießfehlertypen erkannt werden können und die Spezifikationsgrenzen am besten erst gar nicht überschritten werden, so dass eine Effizienzsteigerung beim Gießprozess gegeben ist.

## Patentansprüche

1. Verfahren zur Klassifikation von Gießfehlern in einem Gussteil im Rahmen einer Röntgenanalyse, wobei die Gießfehler automatisch jeweils einem bekanntem Gießfehlertyp zugeordnet werden, indem das Röntgenbild des Gussteils mit Merkmalen aus Trainingsbildern bekannter Gießfehlertypen verglichen wird und somit die vorhandenen Gießfehler im untersuchten Gussteil festgestellt werden.

2. Verfahren nach Patentanspruch 1, **dadurch gekennzeichnet, dass** die bekannten Gießfehlertypen in Klassen zusammengefasst werden, die vergleichbare Merkmale im Röntgenbild aufweisen.

3. Verfahren nach Patentanspruch 2, **dadurch gekennzeichnet, dass** Klassen mit vergleichbaren Merkmalen im Röntgenbild zu Oberklassen zusammengefasst werden.

4. Verfahren nach Patentanspruch 3, **dadurch gekennzeichnet, dass** noch weitere Zusammenfassungen auf einer oder noch mehreren Ebenen erfolgen.

5. Verfahren nach Patentanspruch 2, 3 oder 4, **dadurch gekennzeichnet, dass** der Klassifikation ein Entscheidungsbaum zugrunde liegt, der von den abstrakten Oberklassen bzw. Klassen mit einfachen Merkmalen zu dem konkreten Gießfehler mit komplexen Merkmalen durchlaufen wird.

6. Verfahren nach einem der vorstehenden Patentansprüche, **dadurch gekennzeichnet, dass**, nachdem der konkrete Gießfehler automatisch erkannt wurde, eine automatische Steuerung des Gießprozesses erfolgt und die Parameter des Gießprozesses in Abhängigkeit des erkannten Gießfehlers automatisch verändert werden.
